# EUROPEAN PATENT SPECIFICATION

(11) **EP 4 334 240 B1**
(45) Date of publication and mention of the grant of the patent: **13.08.2025**
(21) Application number: 22730585.1
(22) Date of filing: 06.05.2022
(51) Int. Cl.: B68B 1/04, A01K 27/00, B68B 5/00, B68B 5/08, F16G 11/10, B68B 1/00

(54) **REIN SAFETY CONNECTOR DEVICE**
ZÜGELSICHERHEITSVERBINDUNGSGERÄT
DISPOSITIF DE CONNECTEUR DE SÉCURITÉ RÊNES

(30) Priority: 07.05.2021 GB 202106522; 12.01.2022 GB 202200353
(43) Date of publication of application: 13.03.2024
(73) Proprietor: Williams, Laurie, Chester Cheshire CH3 6AN (GB)
(72) Inventor: Williams, Laurie, Chester Cheshire CH3 6AN (GB)
(74) Representative: Hartley, Lucinda Jane
(86) International application number: PCT/GB2022/051157
(87) International publication number: WO 2022/234291

(56) References cited:
- DE-U1- 202011 105 589
- US-A- 4 733 625

## Description

### Field of the Invention

The present invention relates to a safety device for a pair of reins and in particular a connector device that permits a pair of reins to break when subject to certain force.

### Background of the Invention

When horse, ponies, donkeys and other animals are ridden they are typically provided with a bridle and reins. The reins connect to a bit which is attached to the bridle, or in the case of bites bridles to rein attachment points. Reins are typically provided in pairs. Whilst in some styles of riding the rains of the pair are not connected together at their ends remote from the bit, in many styles the individual reins are connected together at their ends remote from the bit. The connection is usually provided by a buckle, or the reins may be stitched together.

One disadvantage of reins that are attached to each other at their ends remote from the bit is that if the reins become caught on an object, a dangerous situation may arise. For example, in the case of a rider falling from a horse it is not uncommon for a limb of the rider to become caught in the reins. This can be extremely dangerous, resulting in the rider being dragged by the horse. It is also known for the reins to become caught around an object. The object may be one that is being passed by the horse and rider, such as a hook on a gate post for example.

In any situation where a force is applied to the reins other than under the control of the rider, there is the potential for a dangerous situation to arise.

It has been proposed to provide a connector for connecting the free ends of the reins of a pair together that permits the reins to separate when the connector is subjected to a certain force.

The problem described above is longstanding and well known. Numerous attempts have been made to provide a connection that will break when subject to a threshold force.

For example, US 6,098,384 describes an inset which attaches to the ends of a standard pair or reins having buckle connector. The insert includes a frangible buckle. If the reins are subject to a threshold force, the frangible buckle will break and the reins come apart.

WO2017164870 is another example of an insert positioned between the free ends of a pair of reins which include hook and loop material. When a force is exerted on the reins that is sufficient to detach the hook material from the loop material, the connection between the free ends of the reins is broken.

DE202011105589U describes another alternative connector which is designed to release when the reins are subject to a threshold force.

Whilst numerous attempts have been made addressing the problem described above, none of the solutions have been adopted widely. In the case of a frangible buckle, if the buckle is broken, reconnecting the free ends of the reign is not straightforward. The broken part of the buckle must be replaced for example. In general, inserts can change the balance of the reins which may make them undesirable for the rider. The feel of the rein in the riders hands can be affected by adding additional weight to the ends of the reins remote from the bit or connection to the bridle.

US 4,733,625 A discloses a safety connector device for anchor ropes.

It would therefore be desirable to provide an improved releasable connector for connecting together the free ends of a pair of reins.

It would also be desirable to provide a pair of reins including such an improved releasable connector.

### Summary of the Invention

A rein safety connector device according to the invention is defined in claim 1. Advantageous embodiments of the rein safety connector device according to the claimed invention are defined in the dependent claims.

According to the invention there is provided a rein safety connector device, the device comprising a ball component including a ball, a socket component including a socket shaped to receive the ball, and a retaining member, the socket including an opening having a diameter smaller than the diameter of the ball, the opening being configured for expansion upon application of a first force along a longitudinal axis of the socket component in a first direction by the ball of said ball component and retraction upon removal of said force, wherein the retaining member is attachable to the socket component around the opening thereof to secure the ball of the ball component in the socket of said socket component, the ball releasable from the socket when subject to a second force, greater than the first force along said longitudinal axis in a second direction, wherein the retaining member is attachable to the socket component by means of a rotational coupling, wherein the retaining member and the socket component each comprise a respective part of the rotational coupling, wherein the rotational coupling comprises co-operating internal and external threads on respective ones of the socket component and the retaining member.

The second force may be related to the weight of a rider. For example, the rein safety connector may be configured differently according to different weights of rider. For a child weighing between 12 and 30kgs, the rein safety connector may be configured such that the second force is 150N, whereas for an adult weighing 30-50kgs, the rein safety connector may be configured such that the second force is 300N.

The retaining member is attachable to the socket component by means of a rotational coupling, wherein the retaining member and the socket component each comprise a respective part of the rotational coupling.

The rotational coupling comprises co-operating internal and external threads on respective ones of the socket component and the retaining member.

Preferably, the retaining member is attachable to the socket component such that the retaining member is immediately adjacent to the opening of the socket component.

Preferably, the retaining member is attachable to the socket component after insertion of the ball into the socket of the socket component.

When the rein safety connector device as hereinbefore defined is subjected to the second force, the ball is released from the socket. The device may then be reassembled by passing the ball through the retaining member, pushing the ball back into the socket, and then re-attaching the retaining member to the socket component.

Advantageously, the opening is defined by a plurality of leaves, each leaf moveable outwards relative to said longitudinal axis when subject to said first or second force.

Each leaf may include a region of reduced thickness, said region distal from the opening and forming part of the socket.

Preferably, the socket component part of the rotational coupling is situated beyond the leaves, distal from the opening.

The ball component may comprise a central portion and wherein the ball is attached to the central portion by a ball connector.

The central portion may include a wall, the ball connector extending from the wall.

Preferably, the wall surrounds an opening or a region of material.

Advantageously, the depth of the material surrounded by the wall is smaller than the depth of the wall.

The retaining member may be provided with grip elements.

Each of the ball component and the socket component may be provided with rein attachment elements.

The ball component may be fabricated from a metal or a metal alloy and the socket component and retaining member may be respective one-piece plastics mouldings. Preferably the ball component is a one-piece metal or metal alloy casting. Preferably the ball component is fabricated from a metal or metal alloy selected from the group comprising: zinc, aluminium and steel.

Alternatively, each of the ball component, socket component and retaining member are respective one-piece plastics mouldings.

Preferably, the or each one-piece plastics moulding is fabricated from a plastic selected from the group comprising: nylon or polypropylene.

The socket component and the retaining member are preferably each one-piece plastic mouldings, fabricated from plastic selected from the group comprising: nylon or polypropylene.

The ball component may be fabricated from a zinc casting and both the retaining ring component and socket component may be fabricated from a one-piece polypropylene moulding.

The ball component may be fabricated from a zinc casting, the retaining ring component may be fabricated as a one-piece nylon moulding, and the socket component may be fabricated from a one-piece polypropylene moulding.

The ball component may be fabricated from a zinc casting and both the retaining ring component and socket component may be fabricated from a one-piece nylon moulding.

Advantageously, the retaining member is configured such that when the ball is subjected to the second force, the retaining member expands within its elastic limit. This allows the opening of the socket to expand, releasing the ball of the ball component from the socket of the socket component.

According to another, second, aspect of the invention there is provided the combination of the rein safety device according to the invention and a pair of reins, one of the pair attached to the socket component and the other of the pair attached to the ball component.

According to a third aspect of the invention there is provided a bridle including the combination of the second aspect of the invention.

### Brief Description of the Drawings

In the Drawings, which illustrate preferred embodiments of the invention, and are by way of example:
Figure 1 is a schematic illustration of a ball and socket safety device according to the invention;
Figure 2 is an exploded view of the safety device illustrated in Figure 1;
Figure 3 is a schematic representation of the component including the ball of the safety device illustrated in Figure 1;
Figure 4 is a plan view of the component illustrated in Figure 3;
Figure 5 is a cross-section on axis A-A of the component illustrated in Figure 4;
Figure 6 is a schematic representation of the component including the socket of the safety device illustrated in Figure 1;
Figure 7 is a plan view of the component illustrated in Figure 6;
Figure 8 is a cross-section on axis A-A of the component illustrated in Figure 7;
Figure 9 is an end view of the component illustrated in Figure 6;
Figure 10 is cross-section on axis C-C;
Figure 11 is an end view of a retaining ring component of the safety device illustrated in Figure 1;
Figure 12 is a cross-section on axis A-A of the component illustrated in Figure 11;
Figure 13 is a cross-section on axis C-C of the component illustrated in Figure 12;
Figure 14 is an exploded view of the safety device of the invention in a state of partial assembly;
Figure 15 is an end view of the safety device illustrated in Figure 1;
Figure 16 is a longitudinal cross-section on the axis A-A of Figure 15; and
Figure 17 is a schematic illustration of bridle and rein set according to the invention.

### Detailed Description of the Preferred Embodiments

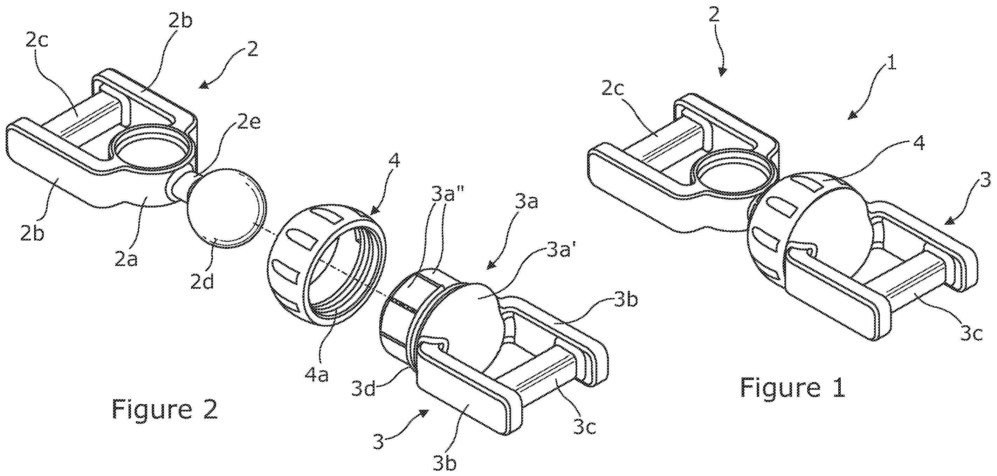

Referring now to Figures 1 and 2, the safety device 1 of the invention comprises a ball component 2, a socket component 3 and a retaining ring component 4. As can be appreciated from Figures 1 and 2, the ball of the ball component is passed through the ring component 4 and is pushed into the socket component 3. The retaining ring component 4 has a larger inner diameter larger than the diameter of the ball 2d, allowing the ball 2d to pass through the ring component 4.

In the illustrated example, the ball component is formed as a one-piece zinc casting which comprises a central portion from which extend elongate side members 2b which are connected together by a cross-member 2c at the ends of the elongate side members 2b remote from the central portion 2a. The ball 2d of the ball component 2 is also connected to the central portion 2a by a connector 2e. In use, a free end of one rein of a pair passes around the cross member 2c to fasten the rein to the ball portion 2. The ball component may also be formed as a one-piece plastics moulding.

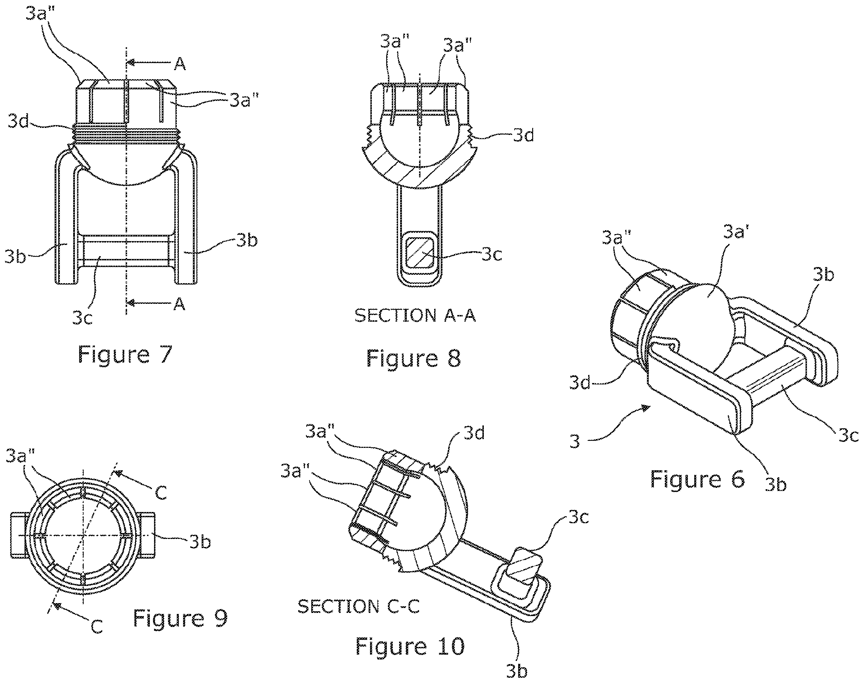

The socket component 3 is formed as a one-piece plastics moulding comprising a socket element 3a from which extend side members 3b. The ends of the side members distal from the socket element 3a are connected together by a cross-member 3c at the ends of the elongate side members 3b. The socket element 3a (which is described in greater detail in Figures 6 to 10) comprises a socket base 3a' and a plurality of socket leaves 3a" and an externally threaded region 3d.

The retaining ring component 4 comprises an internal thread 4a which is configured to co-operate with the external thread 3d of the socket component. The retaining ring 4 is provided with external grip elements provided by depressions 4b formed in the outer surface of the retaining ring 4.

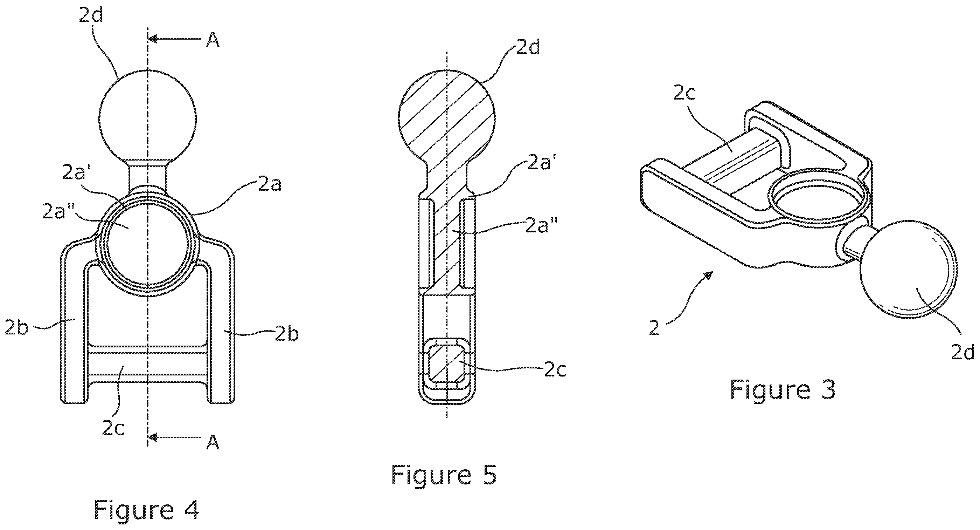

The ball component 2 is illustrated in greater detail in Figures 3 to 5. The central portion 2a comprises an outer wall 2a' having a first depth and a region 2a" that is surrounded by the wall 2a' and which has a depth less than the thickness of wall 2a'. The central portion 2a therefore provides a convenient part to grip when a user is connecting the ball 2d of the ball component 2 to the socket 3a of socket component 3. In the illustrated embodiment, the region 2a" has a diameter of 12mm and the outer wall 2a' has a diameter of 14mm, the wall having a thickness of 1mm.

The wall 2a' adds strength and rigidity to the whole ball component 2 as well as providing a suitably dimensioned element for the connector 2e to extend from. In the illustrated embodiment, the wall has a depth of 7.3mm, whereas the region 2a" has a depth of 3.3mm.

Figures 6 to 10 illustrate the socket component 3 in greater detail. The socket 3a comprises a socket base 3a' in which the ball 2d is received and an open end through which the ball 2d is inserted, the open end defined by a plurality of adjacent socket leaves 3a". The internal diameter of the socket base 3a' has substantially the same diameter as the external diameter of the ball 2d.

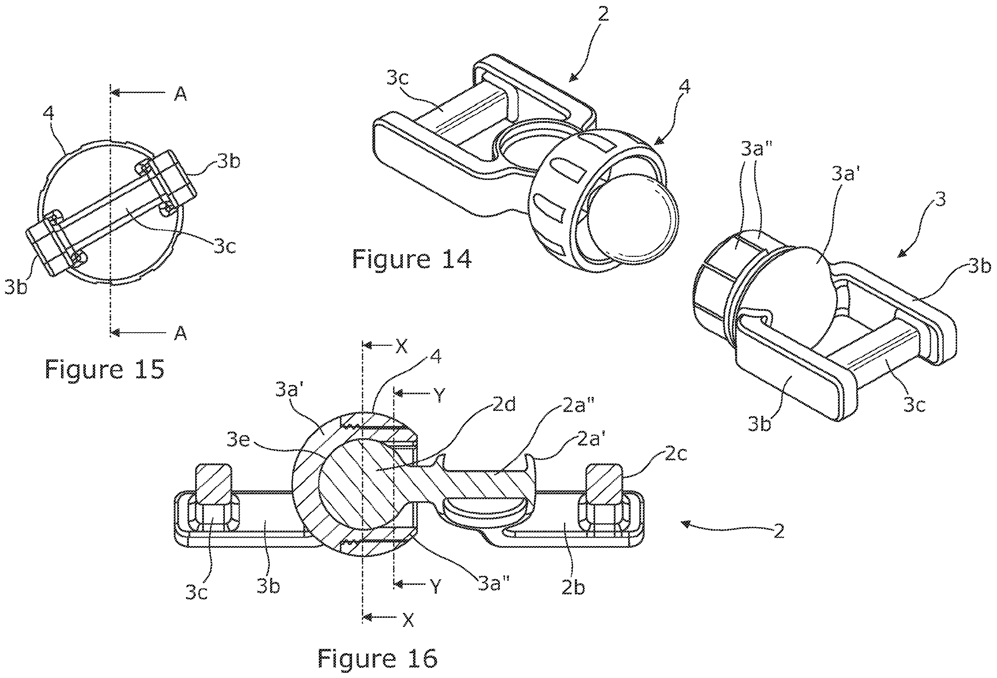

In order to attach the ball 2d to the socket 3a the ball 2d is presented up to the open face of the socket 3a. As the outer surface of the ball 2d engages the end faces of the socket leaves 3a", the socket leaves 3a"are pushed outward thereby allowing the ball 2d to be pushed into the socket base 3a'. The diameter of the open end of the socket 3a is 12mm as shown in Figure 2. Whereas the diameter of the socket is 13mm. The diameter changes at the plane Y-Y illustrated in Figure 16. When the widest part of the ball 2d moves past the plane Y-Y in the direction Z, the socket leaves 3a" return to their closed configuration, and assist in pushing the ball into the position shown in Figure 16 where the outer surface of ball 2d is in contact with the inner surface 3e of the socket 3a.

Figure 14 illustrates the sequence of assembly of the ring 4 relative to the ball component 2 and the socket component 3. The ball 2d is passed through the ring 4. The internal diameter of the ring 4 is larger than the external diameter of the ball 2, the ring having an internal diameter of 16mm compared to the external diameter of 13mm of the ball 2d, in the illustrated example. After the ball has been pushed into the socket 3a, the ring 4 is presented up to and aligned with the threads 3d of the socket 3a. The ring 4 is then rotated relative to the socket so that the internal threads 4a of the ring engage with the external threads 3d of the socket 3a. The ring 4 is rotated until it is tight relative to the socket 3a.

In this example, the socket component and retaining ring component of the safety device 1 are formed from a polypropylene material, preferably the same polypropylene material. The plastics material from which these components are formed is sufficiently flexible to allow the ball and socket to be pulled apart when sufficient force is applied, without fracturing any components and without deforming any components beyond their elastic limits. In the event that an incident occurs in which the reins become caught on an object, if sufficient force is applied to the safety device 1 pulling the ball 2d out of socket 3a, those components will separate. In most circumstances the disconnection of the ball from the socket will allow the reins to pull free from the object upon which the rein was caught.

In order to reassemble the safety device 1, the ring 4 is rotated such that the threaded region 4a of the ring 4 comes away from the threaded region 3e of the socket 3a. The ring 4 is passed over the ball 2d as described above, and the ball 2d is inserted into the socket 3a. The ring 4 is then tighten onto the socket 3a as described above.

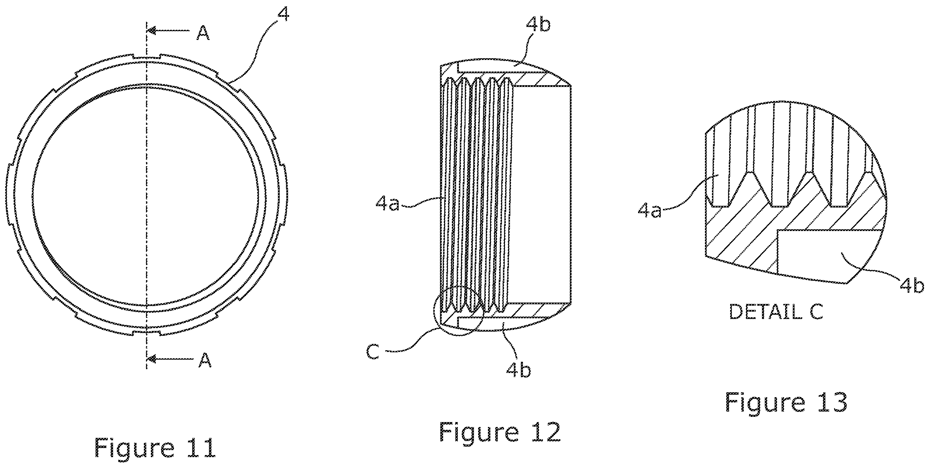

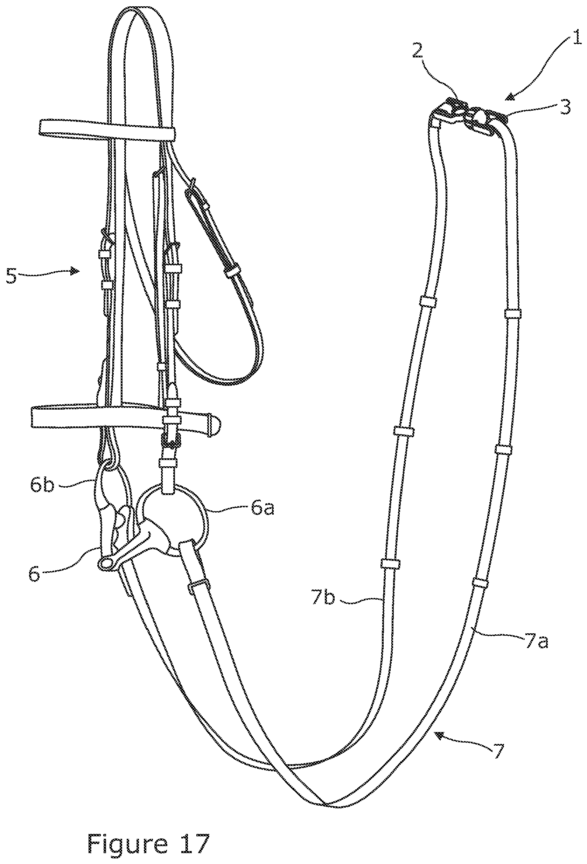

Figure 17 illustrates a bridle 5, including a bit 6, with a rein set 7 attached to the bit 6. The rein set includes a safety device 1 of the type described in Figures 1 to 16, the rein 7a being attached to cross-member 3c and the rein 7b being attached to the cross-member 2c, the respective other ends of reins 7a, 7b being attached to bit rings 6a and 6b respectively.

In a preferred example, suitable for child riders weighing up to approximately a maximum of 30kg, the ball component is fabricated from a zinc casting and has a diameter of approximately 11.5 mm. The socket component 3 and the retaining ring component 4 are each formed as one-piece polypropylene mouldings. The retaining ring component has an inner diameter of 15.8 mm.

In a further preferred example, suitable for riders weighing up to approximately a maximum of 50kg, the ball component is fabricated from a zinc casting and has a diameter of approximately 12.1 mm. The socket component 3 is formed as a one-piece nylon moulding, and the retaining ring component 4 is formed as a one piece polypropylene moulding. The retaining ring component has an inner diameter of 15.8 mm.

In a further preferred example, suitable for riders weighing up to approximately a maximum of 80kg, the ball component is fabricated from a zinc casting and has a diameter of approximately 12.1 mm. The socket component 3 and the retaining ring component 4 are each formed as one-piece nylon mouldings. The retaining ring component has an inner diameter of 15.8 mm.

All of the parts of the safety device of the invention which are described as being fabricated from metal or metal alloys could also be fabricated from plastics; and the parts described as being fabricated from plastics materials could also be fabricated from metal without deviating from the scope of the invention as defined by the appended claims.

## Claims

1. A rein safety connector device (1), the device comprising a ball component (2) including a ball (2d), a socket component (3) including a socket (3a) shaped to receive the ball, and a retaining member (4), the socket including an opening having a diameter smaller than the diameter of the ball, the opening being configured for expansion upon application of a first force along a longitudinal axis of the socket component in a first direction by the ball of said ball component and retraction upon removal of said force, wherein the retaining member is attachable to the socket component around the opening thereof to secure the ball of the ball component in the socket of said socket component, the ball releasable from the socket when subject to a second force, greater than the first force along said longitudinal axis in a second direction, wherein the retaining member is attachable to the socket component by means of a rotational coupling, wherein the retaining member and the socket component each comprise a respective part of the rotational coupling, **characterised in that** the rotational coupling comprises co-operating internal and external threads (4a, 3d) on respective ones of the socket component and the retaining member.

2. A rein safety connector device according to any preceding claim, wherein the retaining member is attachable to the socket component such that the retaining member is immediately adjacent to the opening of the socket component.

3. A rein safety connector device according to any preceding claim, wherein the opening is defined by a plurality of leaves (3a"), each leaf moveable outwards relative to said longitudinal axis when subject to said first or second force, and optionally,
each leaf includes a region of reduced thickness, said region distal from the opening and forming part of the socket.

4. A rein safety connector device according to Claim 3 wherein the socket component part of the rotational coupling is situated beyond the leaves, distal from the opening.

5. A rein safety connector device according to any preceding claim, wherein the ball component comprises a central portion (2a) and wherein the ball is attached to the central portion by a ball connector (2e), and optionally,
wherein the central portion includes a wall, the ball connector extending from the wall.

6. A rein safety connector device according to Claim 5, wherein the central portion includes a wall, the ball connector extending from the wall, and the wall surrounds an opening or a region of material (2a"), and
optionally,
wherein the depth of the material surrounded by the wall is smaller than the depth of the wall.

7. A rein safety connector device according to any preceding claim, wherein the retaining member is provided with grip elements.

8. A rein safety connector device according to any preceding claim, wherein each of the ball component and the socket component is provided with rein attachment elements (2c, 3c).

9. A rein safety connector device according to any preceding claim, wherein the ball component is fabricated from a metal or a metal alloy, and the socket component and retaining member are respective one piece plastics mouldings; or wherein the ball component is fabricated from a metal or metal alloy selected from the group comprising: zinc, aluminium and steel, and the socket component and retaining member are respective one piece plastics mouldings.

10. A rein safety connector device according to any of Claims 1 to 8, wherein each of the ball component, socket component and retaining member are respective one piece plastics mouldings.

11. A rein safety connector device according to any of claims 9 or 10, wherein the one piece plastics mouldings are fabricated from nylon or polypropylene.

12. A rein safety connector device according to Claim 9, wherein the ball component is a one piece metal or metal alloy casting; or
wherein the ball component is a one piece metal or metal alloy casting and the metal or metal alloy is selected from the group comprising: zinc, aluminium and steel

13. A rein safety connector device according to any preceding claim, wherein the retaining member is configured such that when the ball is subjected to the second force, the retaining member expands within its elastic limit.

14. The combination of the rein safety connector device according to any of Claims 1 to 13 and a pair of reins, one of the pair attached to the socket component and the other of the pair attached to the ball component.

15. A bridle including the combination of Claim 14.

## Patentansprüche

1. Zügelsicherheitssteckervorrichtung (1), wobei die Vorrichtung eine Kugelkomponente (2), einschließend eine Kugel (2d), eine Pfannenkomponente (3), einschließend eine Pfanne (3a), die dazu geformt ist, die Kugel aufzunehmen, und ein Rückhalteelement (4) umfasst, wobei die Pfanne eine Öffnung einschließt, die einen Durchmesser aufweist, der kleiner als der Durchmesser der Kugel ist, wobei die Öffnung zur Ausdehnung bei Ausübung einer ersten Kraft entlang einer Längsachse der Pfannenkomponente in einer ersten Richtung durch die Kugel der Kugelkomponente und zur Einziehung bei Entfernung der Kraft konfiguriert ist, wobei das Rückhalteelement an der Pfannenkomponente um die Öffnung dieser angebracht werden kann, um die Kugel der Kugelkomponente in der Pfanne der Pfannenkomponente zu sichern, wobei die Kugel aus der Pfanne lösbar ist, wenn sie einer zweiten Kraft, die größer als die erste Kraft ist, entlang der Längsachse in einer zweiten Richtung ausgesetzt wird, wobei das Rückhalteelement an der Pfannenkomponente mittels einer Drehkopplung angebracht werden kann, wobei das Rückhalteelement und die Pfannenkomponente jeweils einen jeweiligen Teil der Drehkopplung umfassen, **dadurch gekennzeichnet, dass** die Drehkopplung ein Innengewinde und ein Außengewinde (4a, 3d), die zusammenwirken, auf jeweiligen einen der Pfannenkomponente und des Rückhalteelements umfasst.

2. Zügelsicherheitssteckervorrichtung nach einem vorhergehenden Anspruch, wobei das Rückhalteelement an der Pfannenkomponente angebracht werden kann, so dass das Rückhalteelement unmittelbar benachbart zu der Öffnung der Pfannenkomponente ist.

3. Zügelsicherheitssteckervorrichtung nach einem vorhergehenden Anspruch, wobei die Öffnung durch eine Vielzahl von Flügeln (3a") definiert ist, wobei jeder Flügel in Bezug auf die Längsachse nach außen bewegbar ist, wenn er der ersten oder der zweiten Kraft ausgesetzt wird, und optional
wobei jeder Flügel eine Region mit einer verringerten Dicke einschließt, wobei die Region distal von der Öffnung ist und einen Teil der Pfanne bildet.

4. Zügelsicherheitssteckervorrichtung nach Anspruch 3, wobei sich der Pfannenkomponententeil der Drehkopplung an den Flügeln vorbei distal von der Öffnung befindet.

5. Zügelsicherheitssteckervorrichtung nach einem vorhergehenden Anspruch, wobei die Kugelkomponente einen zentralen Abschnitt (2a) umfasst und wobei die Kugel durch einen Kugelstecker (2e) an dem zentralen Abschnitt angebracht ist, und optional
wobei der zentrale Abschnitt eine Wand einschließt, wobei sich der Kugelstecker von der Wand erstreckt.

6. Zügelsicherheitssteckervorrichtung nach Anspruch 5, wobei der zentrale Abschnitt eine Wand einschließt, sich der Kugelstecker von der Wand erstreckt und die Wand eine Öffnung oder eine Materialregion (2a") umgibt, und optional
wobei die Tiefe des Materials, das von der Wand umgeben ist, kleiner als die Tiefe der Wand ist.

7. Zügelsicherheitssteckervorrichtung nach einem vorhergehenden Anspruch, wobei das Rückhalteelement mit Griffelementen versehen ist.

8. Zügelsicherheitssteckervorrichtung nach einem vorhergehenden Anspruch, wobei jede von der Kugelkomponente und der Pfannenkomponente mit Zügelanbringungselementen (2c, 3c) versehen ist.

9. Zügelsicherheitssteckervorrichtung nach einem vorhergehenden Anspruch, wobei die Kugelkomponente aus einem Metall oder einer Metalllegierung gefertigt ist, und die Kugelkomponente und die Pfannenkomponente jeweilige einteilige Kunststoffformteile sind; oder wobei die Kugelkomponente aus einem Metall oder einer Metalllegierung gefertigt ist, das bzw. die aus der Gruppe umfassend Zink, Aluminium und Stahl ausgewählt ist, und die Pfannenkomponente und das Rückhalteelement jeweilige einteilige Kunststoffformteile sind.

10. Zügelsicherheitssteckervorrichtung nach einem der Ansprüche 1 bis 8, wobei jede bzw. jedes von der Kugelkomponente, der Pfannenkomponente und des Rückhalteelements ein jeweiliges einteiliges Kunststoffformteil ist.

11. Zügelsicherheitssteckervorrichtung nach einem der Ansprüche 9 oder 10, wobei die einteiligen Kunststoffformteile aus Nylon oder Polypropylen gefertigt sind.

12. Zügelsicherheitssteckervorrichtung nach Anspruch 9, wobei die Kugelkomponente ein einteiliges Metall- oder Metalllegierungsgussteil ist; oder
wobei die Kugelkomponente ein einteiliges Metall- oder Metalllegierungsgussteil ist und das Metall oder die Metalllegierung ausgewählt ist aus der Gruppe umfassend: Zink, Aluminium und Stahl.

13. Zügelsicherheitssteckervorrichtung nach einem vorhergehenden Anspruch, wobei das Rückhalteelement konfiguriert ist, so dass, wenn die Kugel der zweiten Kraft ausgesetzt wird, sich das Rückhalteelement innerhalb seiner Elastizitätsgrenze ausdehnt.

14. Kombination der Zügelsicherheitssteckervorrichtung nach einem der Ansprüche 1 bis 13 und eines Paars Zügel, wobei einer von dem Paar an der Pfannenkomponente angebracht ist und der andere von dem Paar an der Kugelkomponente angebracht ist.

15. Zaumzeug, einschließend die Kombination nach Anspruch 14.

## Revendications

1. Un dispositif de connexion de sécurité pour les rênes (1), le dispositif comprenant un composant à boule (2) incluant une boule (2d), un composant à douille (3) incluant une douille (3a) ayant une forme pour recevoir la boule, et un élément de retenue (4), la douille incluant une ouverture ayant un diamètre inférieur au diamètre de la boule, l'ouverture étant configurée pour se dilater lors de l'application d'une première force le long d'un axe longitudinal du composant à douille dans une première direction par la boule dudit composant de la boule et se rétracter lors du retrait de ladite force, dans lequel l'élément de retenue peut être fixé au composant à douille autour de son ouverture pour fixer la boule du composant à boule dans la douille dudit composant à douille, la boule pouvant être libérée de la douille lorsqu'elle est soumise à une deuxième force supérieure à la première force le long dudit axe longitudinal dans une deuxième direction, dans lequel l'élément de retenue peut être fixé au composant à douille au moyen d'un couplage rotatif, dans lequel l'élément de retenue et le composant à douille comprennent chacun une partie respective du couplage rotatif, **caractérisé en ce que** le couplage rotatif comprend des filetages internes et externes coopérants (4a, 3d) sur respectivement ceux du composant à douille et de l'élément de retenue.

2. Un dispositif de connexion de sécurité pour les rênes selon l'une quelconque des revendications précédentes, dans lequel l'élément de retenue peut être fixé au composant à douille de telle sorte que l'élément de retenue est immédiatement adjacent à l'ouverture du composant à douille.

3. Un dispositif de connexion de sécurité pour les rênes selon l'une quelconque des revendications précédentes, dans lequel l'ouverture est définie par une pluralité de lames (3a"), chaque lame pouvant être déplacée vers l'extérieur par rapport audit axe longitudinal lorsqu'elle est soumise à ladite première ou deuxième force, et en option,
chaque lame inclut une région d'épaisseur réduite, ladite région étant distale de l'ouverture et faisant partie de la douille.

4. Un dispositif de connexion de sécurité pour les rênes selon la revendication 3, dans lequel la partie composant à douille du couplage rotatif est située au-delà des lames, distale de l'ouverture.

5. Un dispositif de connexion de sécurité pour les rênes selon l'une quelconque des revendications précédentes, dans lequel le composant à boule comprend une partie centrale (2a) et dans lequel la boule est fixée à la partie centrale par un connecteur de boule (2e), et en option,
dans lequel la partie centrale inclut une paroi, le connecteur de boule s'étendant depuis la paroi.

6. Un dispositif de connexion de sécurité pour les rênes selon la revendication 5, dans lequel la partie centrale inclut une paroi, le connecteur de boule s'étendant de la paroi, et la paroi entoure une ouverture ou une région de matériau (2a"), et en option,
dans lequel la profondeur du matériau entouré par la paroi est inférieure à la profondeur de la paroi.

7. Un dispositif de connexion de sécurité pour les rênes selon l'une quelconque des revendications précédentes, dans lequel l'élément de retenue est muni d'éléments de préhension.

8. Un dispositif de connexion de sécurité pour les rênes selon l'une quelconque des revendications précédentes, dans lequel le composant à boule et le composant à douille sont chacun munis d'éléments de fixation de rêne (2c, 3c).

9. Un dispositif de connexion de sécurité pour les rênes selon l'une quelconque des revendications précédentes, dans lequel le composant à boule est fabriqué à partir d'un métal ou d'un alliage métallique, et le composant à douille et l'élément de retenue sont respectivement des moulages en plastique d'une seule pièce ; ou
dans lequel le composant à boule est fabriqué à partir d'un métal ou d'un alliage métallique sélectionné dans le groupe comprenant : le zinc, l'aluminium et l'acier, et le composant à douille et l'élément de retenue sont respectivement des moulages en plastique d'une seule pièce.

10. Un dispositif de connexion de sécurité pour les rênes selon l'une quelconque des revendications 1 à 8, dans lequel le composant à boule, le composant à douille et l'élément de retenue sont chacun respectivement des moulages en plastique d'une seule pièce.

11. Un dispositif de connexion de sécurité pour les rênes selon l'une quelconque des revendications 9 ou 10, dans lequel les moulages en plastique d'une seule pièce sont fabriqués à partir de nylon ou de polypropylène.

12. Un dispositif de connexion de sécurité pour les rênes selon la revendication 9, dans lequel le composant à boule est une pièce coulée en métal ou en alliage métallique ; ou
dans lequel le composant à boule est une pièce coulée en métal ou en alliage métallique et le métal ou l'alliage métallique est sélectionné dans le groupe comprenant : le zinc, l'aluminium et l'acier.

13. Un dispositif de connexion de sécurité pour les rênes selon l'une quelconque des revendications précédentes, dans lequel l'élément de retenue est configuré de telle sorte que, lorsque la boule est soumise à la deuxième force, l'élément de retenue se dilate dans sa limite élastique.

14. La combinaison du dispositif de connexion de sécurité pour les rênes selon l'une quelconque des revendications 1 à 13 et d'une paire de rênes, un des rênes de la paire étant fixé au composant à douille et l'autre rêne de la paire étant fixé au composant à boule.

15. Une bride incluant la combinaison selon la revendication 14.
